# EUROPÄISCHE PATENTSCHRIFT

(11) **EP 1 255 412 B1**
(45) Veröffentlichungstag und Bekanntmachung des Hinweises auf die Patenterteilung: **22.02.2006**
(21) Anmeldenummer: 02009792.9
(22) Anmeldetag: 30.04.2002
(51) Int. Cl.: H04Q 3/62

(54) **Verfahren zur Realisierung einer Systemzeit in einem Telekommunikationsnetz und korrespondierendes Telekommunikationssystem**
Method of setting a system time in a telecommunication network and corresponding telecommunication system
Méthode de réaliser un temps de système dans un réseau de télécommunication et système de télécommunication correspondant

(30) Priorität: 02.05.2001 DE 10121335
(43) Veröffentlichungstag der Anmeldung: 06.11.2002
(73) Patentinhaber: Tenovis GmbH & Co. KG, 60326 Frankfurt (DE)
(72) Erfinder: Kayser, Udo, 42285 Wuppertal (DE); Pohler, Walter, 41564 Karst (DE)
(74) Vertreter: Heinze, Ekkehard

(56) Entgegenhaltungen:
- EP-A- 0 963 123
- EP-A- 0 967 830
- US-A- 5 289 508
- US-A- 5 657 358

## Beschreibung

Die Erfindung betrifft ein Verfahren zur Realisierung einer Systemzeit in einem Telekommunikationsnetz gemäß dem Oberbegriff des Patentanspruches 1 und ein Telekommunikationssystem zur Durchführung des Verfahrens gemäß dem Oberbegriff des Patentanspruches 11.

Nebenstellenanlagen verfügen in der Regel über eine anlagen- bzw. systeminterne Uhr zur Regelung der Systemzeit. Die Systemzeit besteht aus Zeit- und Datumsangaben der systeminternen Uhr.

Derartige systeminterne Uhren werden über Einrichtungen zum Steuern der Uhr oder über bedienende Personen, welche Administrationswerkzeuge des Systems darstellen, gesteuert, um ihre Zeiteinstellung zu regulieren bzw. zu erneuern. Alternativ können derartige Uhren über eine Empfangseinrichtung zum Empfangen einer systemunabhängigen Normalzeit und einer Recheneinrichtung zum Umrechnen der Normalzeit in eine Systemzeit neu eingestellt werden.

In herkömmlichen Telekommunikationsnetzen verfügt jeder Netzknoten, dem eine Nebenstellenanlage bzw. Telekommunikationsanlage zugeordnet sein kann, in der Regel über eine eigene Uhr, deren Systemzeit individuell für jeden Netzknoten eingestellt werden muß. Eine derartige individuelle Einstellung erfordert zusätzliches Personal. Dieses verursacht nicht nur zusätzliche Kosten, sondern ergibt auch einen von der jeweiligen Person abhängigen Unsicherheitsfaktor in der richtigen und zuverlässigen Einstellung der Uhr. Auch wenn als Alternative eine Normalzeitempfangseinrichtung verwendet wird, so ist das Herstellen und der Einbau der Normalzeitempfangseinrichtungen kostenintensiv, da jeder in Telekommunikationsnetzen angeordnete Netzknoten, der mit einer eigenen Uhr ausgestattet ist, eine solche Normalzeitempfangseinrichtung benötigt.

Derartige Telekommunikationsnetze sind üblicherweise auf ISDN (Integrated Services Digital Network) basierende Kommunikationsnetze. ISDN ist eine Vermittlungstechnik, die alle vermittlungstechnischen Dienste (z. B. Daten, Sprache, Video und Fax) in ein digitales Leitungsnetz integriert. ISDN stellt eine Schnittstelle dar, um digitale Dienste unabhängig von Leitungsarten oder der Nutzung der Leitung zu verwenden. Basiert das Kommunikationsnetz auf dem QSIG (Signalisierung am Q-Referenzpunkt) -Standard bzw. auf dem PSS1 (Private Integrated Signaling System Number 1) -Standard, so können standardisierte und nicht standardisierte, proprietäre Leistungsmerkmale für verschiedene Funktionen und deren Übertragung zwischen den Netzknoten verwendet werden.

QSIG bzw. PSS1 bezeichnen ein Signalisierungsverfahren, das international und für den europäischen Raum standardisiert ist. Die Standardisierung erfolgt auf internationaler Ebene durch ISO/IEC und im europäischen Raum durch ETSI und ECMA, wobei eine gegenseitige Harmonisierung des Standards angestrebt wird. QSIG ist offen für Hersteller von Telekommunikationsanlagen. Es ermöglicht daher insbesondere die Signalisierung und damit die Kommunikation zwischen Telekommunikationsanlagen von verschiedenen Herstellern, sofern diese Telekommunikationsanlagen nach QSIG-Standard signalisieren. QSIG bzw. PSS1 definieren ein ISDN für die Teilnehmer eines privaten Kommunikationsnetzes. Folgende Standards beschreiben die grundlegende Kommunikation bei QSIG, die sogenannten Basic Calls: ETS 300 172 Edition 3, ISO/IEC 11572 Edition 2 und EC-MA 143 3^{rd} Edition. Im Standard sind die Basisfunktionen der Signalisierung definiert. Zusätzliche Funktionen (im internationalen Sprachgebrauch: Supplementary Services) nutzen zu ihrer Steuerung das standardisierte ROSE (Remote Operation Services Elements) -Konzept. Das ROSE-Konzept definiert also die Umgebung, um zusätzliche Funktionen zu realisieren. Das ROSE-Konzept findet Anwendung bei standardisierten Supplementary Services, es wird aber auch zur Steuerung herstellerspezifischer Supplementary Services eingesetzt. Im allgemeinen definiert ROSE fünf Aktionen:
RO-Invoke:
   Eine Operation wird durch diese Aktion aufgerufen, das heißt, die Operation wird bei der Partnerinstanz, also der gerufenen Telekommunikationsanlage bzw. dem Netzknoten ausgelöst.
RO-Result:
   Hier wird das positive Ergebnis einer Operation gemeldet, d. h. der Aufruf der Operation ist erfolgreich.
RO-Error:
   Dieses Ergebnis meldet ein negatives Ergebnis einer Operation, d. h. die Operation wurde nicht ausgeführt.
RO-Reject-U:
   Diese Aktion wird durchgeführt, wenn eine Anforderung im Fehlerfall durch den den Dienst nutzenden Teilnehmer abgewiesen wird.
RO-Reject-P:
   Hier wird eine Anforderung im Fehlerfall durch den Erbringer des Dienstes, beispielsweise einer Vermittlungseinrichtung, abgewiesen.

Die ROSE-Protokollelemente werden mittels des Facility-Informationselements übertragen. Das Facility-Informationselement wird entweder mit Basismeldungen (Meldungen, die einen Verbindungsaufbau und Verbindungsabbau steuern), wie SETUP, ALERT, CONNECT, PROGRESS, DISCONNECT oder NOTIFY übertragen, oder, falls keine Basismeldungen zur Verfügung stehen, mit der dann zu verwendenden Meldung FACILITY. Mehrere ROSE-Protokollelemente können in einem Facility-Informations-Element enthalten sein.

Auf diese ROSE-Protokollelemente werden die ROSE-Aktionen abgebildet. Die Protokollelemente werden im Englischen als Application Protocol Data Unit (APDU) bezeichnet. Die vier Protokollelemente sind: RO-Invoke, RO-Return-Result, RO-Return-Error und RO-Reject.

Auch in derartigen auf QSIG-Standard basierenden Kommunikationsnetzen ist nachteilhaft entweder das Einrichten einer Normalzeitempfangseinrichtung in jedem Netzknoten oder das personalaufwendige Einsetzen von Administrationswerkzeugen erforderlich.

Die EP-A-0 963 123 beschreibt ein Verfahren und ein System zur Realisierung einer Systemzeit in einem Telekommunikationsnetz, mit dem Ziel der Synchronisation eines TDMA-Systems. Dazu werden Zeitinformationen übertragen, die eine lokale Uhr mit Takten und ein kurzes Zeitintervall betreffen, welches zur Erfüllung der Synchronisationsaufgabe ausreichend ist. Diese Zeitinformationen werden von einer ersten TK-Anlage an mindestens eine zweite TK-Anlage zu deren synchroner Steuerung übertragen.

Demzufolge liegt der vorliegenden Erfindung die Aufgabe zugrunde, ein Verfahren zur Realisierung einer Systemzeit der gattungsgemäßen Art dahingehend weiterzubilden, daß eine kostengünstige und zuverlässige Steuerung mehrerer Telekommunikationsanlagen innerhalb des Telekommunikationsnetzes möglich ist. Desweiteren liegt der vorliegenden Erfindung die Aufgabe zugrunde, ein Telekommunikationssystem zur Durchführung des Verfahrens zur Verfügung zu stellen.

Diese Aufgabe wird verfahrensseitig durch die Merkmale des Anspruches 1 und vorrichtungsseitig durch die Merkmale des Anspruches 11 gelöst.

Ein wesentlicher Punkt der Erfindung liegt in der Anordnung einer zeitinformationssendenden Telekommunikationsanlage und mehrerer zeitinformationsempfangenden Telekommunikationsanlagen in einem Telekommunikationsnetz, die über auf QSIG-Standard basierende Kommunikationsverbindungen des Telekommunikationsnetzes Zeitinformationen zur Zeitsteuerung der zeitinformationsempfangenden Telekommunikationsanlagen austauschen. Auf diese Weise wird ermöglicht, daß ein einzelner Netzknoten, dem eine Telekommunikationsanlage und deren Uhr zugeordnet ist, die Funktion eines zentralen Zeitgebers für das gesamte Telekommunikationsnetz übernimmt. Die Uhren sämtlicher weiterer Telekommunikationsanlagen innerhalb des Telekommunikationsnetzes werden zentral von diesem Netzknoten aus gesteuert. Somit erübrigt sich eine Zeitgebereinrichtung innerhalb eines jeden Netzknotens, sei es daß diese als Normalzeitempfangseinrichtung oder als Administrationswerkzeug ausgebildet ist. Durch die Einsparung solcher zeitgebender Einrichtungen zum Steuern einer anlageninternen Uhr in jeder Telekommunikationsanlage bzw. dem Netzknoten ist nicht nur eine Kostenersparnis sondern auch eine Erhöhung der Zuverlässigkeit des gesamten zeitgebenden Telekommunikationssystemes aufgrund der zentralen Steuerung gegeben.

In dem Netzknoten mit der zeitgebenden Uhr kann die Zeitsteuerung der Uhr auf beliebige Weise erfolgen, d. h. eine Einstellung der Systemzeit der zeitgebenden Uhr findet mittels Zeitinformationen statt, die auf beliebigem Wege zu diesem Netzknoten übertragen werden.

Erfindungsgemäß werden die von der zeitinformationssendenden zu den zeitinformationsempfangenden Telekommunikationsanlagen übertragenen Zeitinformationen über eine auf QSIG-Standard basierende Kommunikationsverbindung übertragen. Hierzu werden zwei neu entwickelte ROSE-Operationen "dateTimeSet" und "dateTimeUpdate" verwendet. Diese ROSE-Operationen nach dem ROSE-Konzept gemäß dem CCITT X.219/X.229 bilden im Zusammenspiel mit sogenannten "Generic Functions" die Definition des neuen Leistungsmerkmals "Automatischer Uhrenabgleich". Das Leistungsmerkmal wird mittels sogenannter "Generic Functions" nach dem Standard ETS 300 239, ISO/IEC 11582, ECMA 165 und dem ASN.1 nach dem Standard X.208/X.209 auf dem Basic Call ähnlich einem Baukastenprinzip aufgesetzt. Hierbei stellen die Generic Functions Signalisierungsprotokolle für den Transport von Protokoll-Informationen dar, die Teil eines Supplementary Services in dem privaten Telekommunikationsnetz sind.

Nach einer Weiterbildung ermöglicht das Verfahren auch die Festlegung verschiedener Systemzeiten für verschiedene Bereiche des Telekommunikationsnetzes. In diesem Fall sind mehrere Netzknoten mit zeitgebenden Uhren vorhanden, die die jeweiligen Bereiche jeweils mit einer gemeinsamen Systemzeit versorgen. Zur Erkennung der einer zeitnehmenden Uhr zugeordneten Zeitinformationen, die mittels der ROSE-Informationen übertragen werden, werden mit Übertragung der Zeitinformationen zeitgeberindividuelle Kennungszeichen (Identifikationscode) übertragen. Jede Telekommunikationsanlage, die eine zeitnehmende Uhr beinhaltet, wird auf diese Zeitgeberkennung (Identifier) konfiguriert, sofern die zeitnehmende Uhr die Systemzeit dieses Zeitgebers übernehmen soll.

Die zeitgebende Uhr einer einem Netzknoten zugeordneten Telekommunikationsanlage sendet die Zeitinformationen über momentan stattfindende Transaktionen eines QSIG-Basic-Calls an die zeitnehmenden Uhren der anderen Netzknoten zugeordneten Telekommunikationsanlagen. Das für das Senden, Übertragen und Empfangen der Zeitinformationen beschreibende Verfahren ist durch das proprietäre Merkmal "automatischer Uhrenabgleich im QSIG-Netz" nach den Regeln der QSIG-Generic-Function verwirklicht. Dieses Leistungsmerkmal wird mit Hilfe von Einrichtungen zum Senden der Zeitinformationen, zum Empfangen der Zeitinformationen und zum Weiterverarbeiten dieser Daten verwirklicht.

Die zwei ROSE-Operationen "dateTimeUpdate" und "dateTimeSet" werden in einem Facility-Information-Element mittels folgender Meldungen von dem die zeitgebende Uhr enthaltenen Netzknoten zu dem die zeitnehmende Uhr enthaltenen Netzknoten übertragen: SETUP, ALERT, CONNECT, DISCONNECT, PROGRESS, FACILITY und NOTIFY. Auf diese Weise ist es möglich, die Zeitinformationen in aktuell laufenden Transaktionen eines QSIG-Basic-Calls von dem Zeitgeber-Netzknoten zu dem Zeitnehmer-Netzknoten zu übertragen. Welche dieser Meldungen für die Übertragung der Zeitinformationen verwendet wird, wird durch die Konfiguration der zeitgebenden Uhren bestimmt.

Gemäß einer vorteilhaften Ausführungsform können die Zeitinformationen in den Argumenten der neuen ROSE-Operationen zusätzlich zu global für alle Netzknoten geltende Zeitangaben (universal-time) eine lokale für die Telekommunikationsanlage, in der die zeitgebende Uhr angeordnet ist, geltende Zeitangabe umfassen. Die zeitnehmende Uhr in der empfangenden Telekommunikationsanlage kann dann aus den Konfigurationsdaten und der universal-time ihre eigene local-time berechnen bzw. ableiten.

Als optionaler Bestandteil der local-time kann die summer-time während der Sommerzeit die Zeitspanne bestimmen, um die die reguläre Zeit in Stunden und Minuten eingestellt wird. Hierbei enthält die local-time die offizielle Zeit.

Weitere vorteilhafte Ausführungsformen ergeben sich aus den Unteransprüchen.

Bevorzugte Ausführungsbeispiele werden anhand der nachfolgenden Beschreibung und der Abbildungen näher erläutert. Hierbei zeigen:
- Fig. 1: eine schematische Darstellung eines Verfahrensablaufs gemäß einer ersten Ausführungsform der Erfindung;
- Fig. 2: eine schematische Darstellung eines Verfahrensablaufs gemäß einer zweiten Ausführungsform der Erfindung;
- Fig. 3: eine schematische Darstellung eines Verfahrensablaufs gemäß einer dritten Ausführungsform der Erfindung;
- Fig. 4: eine schematische Darstellung eines Verfahrensablaufs gemäß einer vierten Ausführungsform der Erfindung;
- Fig. 5: eine schematische Darstellung eines Verfahrensablaufs gemäß einer fünften Ausführungsform der Erfindung;
- Fig. 6: eine schematische Darstellung eines Verfahrensablaufs gemäß einer sechsten Ausführungsform der Erfindung;
- Fig. 7: eine schematische Darstellung eines Verfahrensablaufs gemäß der siebten Ausführungsform der Erfindung, und
- Fig. 8a und 8b: Darstellungen der einzelnen Operationen gemäß dem erfindungsgemäßen Verfahren.

Für gleiche und gleichwirkende Teile werden in den Figuren die gleichen Bezugszeichen verwendet.

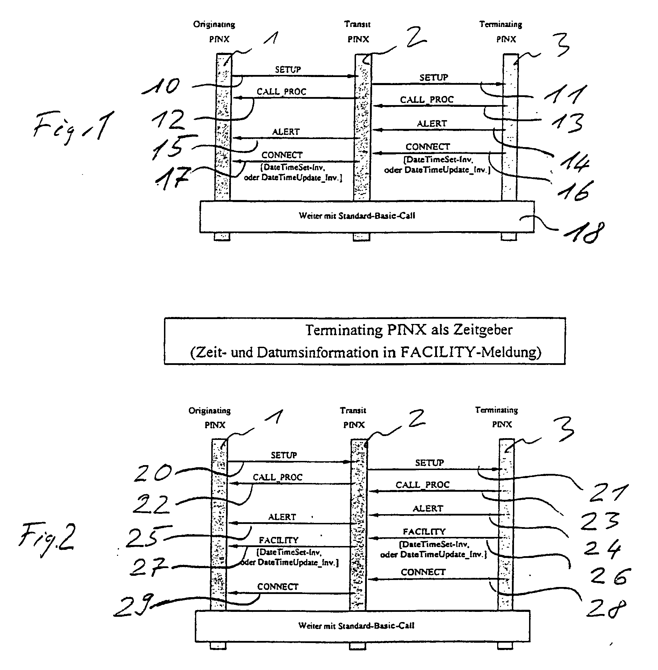

Figur 1 zeigt in einer schematischen Darstellung den Verfahrensablauf eines Verfahrens zur Realisierung einer Systemzeit in Telekommunikationsanlagen gemäß der ersten Ausführungsform der Erfindung. Zwischen der Ursprungsanlage 1, der Transitanlage 2 und der Zielanlage 3, die jeweils als PINX (Private Integrated Netxwork Exchange) ausgebildet sind und jeweils einem Netzknoten innerhalb eines Kommunikationsnetzes zugeordnet sind, bestehen auf QSIG-Standard basierende Kommunikationsverbindungen. Die Meldungen SETUP 10, 11, CALL_PROC 11, 12, ALERT 14, 15 und CONNECT 16, 17 dienen u.a. zum Aufbau einer Verbindung zwischen den Telekommunikationsanlagen. Nachdem Empfang der von der Zielanlage 3 über die Transitanlage 2 zu der Ursprungsanlage 1 gesendeten Meldung CONNECT 16, 17 wird ein Standard-Basic-Call 18 zwischen den Anlagen 1-3 weitergeführt.

Mit der Meldung CONNECT 16, 17 werden die Zeitinformationen mit Hilfe der ROSE-Operationen "dateTimeSet" oder "dateTimeUpdate" von der Zielanlage 3 zu der Ursprungsanlage 1 gesendet. Somit bildet die Zielanlage 3 einen Zeitgeber und die Ursprungsanlage 1 einen Zeitnehmer.

Mit der neuen ROSE-Operation "dateTimeSet" wird beim Zeitnehmer das Ändern der Systemzeit innerhalb der Ursprungsanlage 1 erzwungen. Beispiele hierfür sind das Neusetzen der Systemzeit oder die Umstellung von Sommer- auf Winterzeit.

Mit der neuen ROSE-Operation "dateTimeUpdate" überträgt der Zeitgeber eine vorgegebene Systemzeit. Dem Zeitnehmer bleibt überlassen, unter welchen Bedingungen der Empfang mit dieser ROSE-Operation zum Neueinstellen seiner Systemzeit führt. Beispiele hierfür sind: Die Systemzeit wird nur einmal täglich oder nach Ablauf einer vorbestimmten Frist seit dem letzten Einstellen der Systemzeit eingestellt. Auf diese Wiese kann eine zusätzliche Systemlast begrenzt werden. Diese ROSE-Operation wird im Verlauf eines Basic Calls oder eines Verbindungsaufbaus zu dem Basic Call übertragen.

Figur 2 zeigt eine zweite Ausführungsform der Erfindung. Die Verbindungsmeldungen SETUP, CALL_PROC, ALERT, FACILITY und CONNECT mit dem Bezugszeichen 20-29 dienen wiederum zum Verbindungsaufbau bzw. einer Verbindungsfortführung zwischen den Anlagen 1, 2 und 3. Eine Übertragung einer der neuen ROSE-Operationen "dateTimeSet" oder "dateTimeUpdate" wird von der Zielanlage 3 zu der Ursprungsanlage 1 mittels der Meldung FACILITY 26, 27 durchgeführt. Die ROSE-Operation beinhaltet die notwendigen Zeitinformationen, also eine Zeit- und Datumsinformation, die von der zeitgebenden Uhr der Zielanlage 3 zu der zeitnehmenden Uhr der Ursprungsanlage 1 gesendet werden soll.

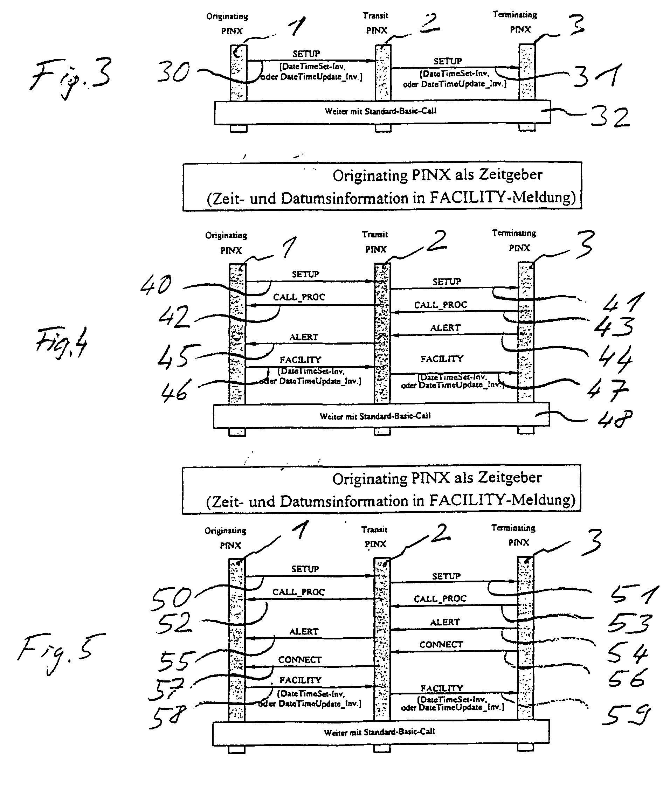

Im Gegensatz zu den in den Figuren 1 und 2 dargestellten Ausführungsformen ist in den in den Figuren 3-5 dargestellten Ausführungsformen nicht die Zielanlage 3, sondern jeweils die Ursprungsanlage 1 als Zeitgeber ausgerichtet. Gemäß der in Figur 3 dargestellten dritten Ausführungsform der Erfindung wird bereits am Anfang mittels der Meldung SETUP 30, 31 die Zeit- und Datumsinformation in der ROSE-Operation "dateTimeSet" oder "dateTimeUpdate" von der Ursprungsanlage zu der Zielanlage übertragen. Anschließend findet eine Fortführung des Standard-Basic-Calls 32 statt.

Die vierte und fünfte Ausführungsform gemäß den Figuren 4 und 5 unterscheidet sich von derjenigen der Figur 3 darin, daß nach Übertragung der Meldungen 40-45 die Zeitinformationen in der ROSE-Operation mittels der Meldung FACILITY 46, 47 bzw. nach dem Übertragen der Meldungen 50-57 mittels der Meldung FACILITY 58, 59 übertragen werden. Die neuen ROSE-Operationen werden ebenso wie in den Verfahren gemäß den anderen Ausführungsformen in einem FACILITY-Information-Element übertragen. Hierbei gelten folgende Bedingungen für das FACILITY-Information-Element:
- Network Facility Extension::
- Für die Source-entity:: EndPINX, oder AnyPINX + Adresse de Zeitgebers
- Für die DestinationEntity:: EndPINX

Die Interpretation APDU erhält den Wert DiscardAnyUnrecognizedAPDU.

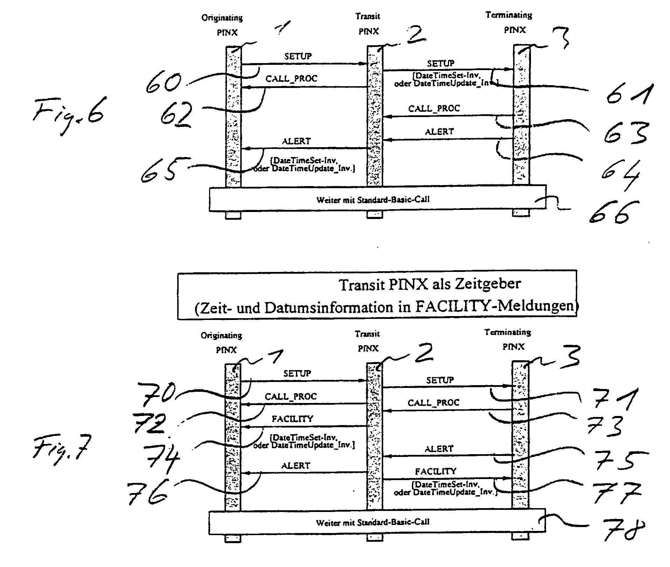

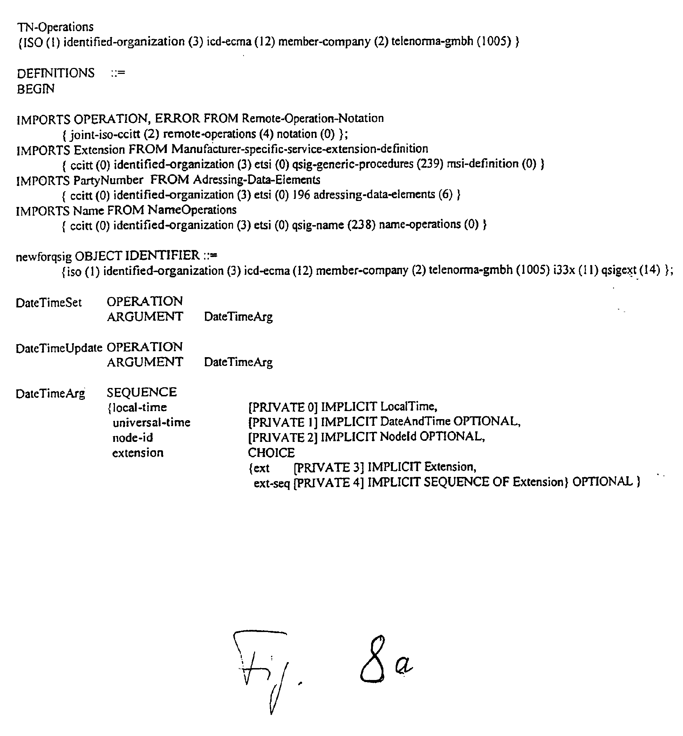

Die in den Figuren 6 und 7 gezeigte sechste und siebte Ausführungsform der Erfindung zeichnen sich dadurch aus, daß weder die Ursprungs- noch die Zielanlage 1, 3, sondern vielmehr die Transitanlage 2 als Zeitgeber agiert. Demzufolge ist die zeitgebende Uhr innerhalb der Transitanlage 2 angeordnet und überträgt die Zeitinformationen nach dem Empfang der Meldung SETUP 60 mittels der Meldung SETUP 61 an die Zielanlage 3. Anschließend wird eine Meldung CALL_PROC 63 von der Zielanlage 3 an die Transitanlage 2 sowie eine Meldung ALERT 64 übertragen. Die Transitanlage 2 überträgt dann die Zeitinformationen an die als Zeitnehmer agierende Ursprungsanlage 1 mittels der Meldung ALERT 65 und den darin enthaltenen ROSE-Operationen. Nun kann das Standard-Basic-Call 66 zwischen den Anlagen weitergeführt werden.

Gegenüber dem Verfahrensablauf gemäß der sechsten Ausführungsform wird die Zeit- und Datumsinformation von der Zeitgeber-Transitanlage 2 zu den Zeitnehmer-Anlagen 1 und 3 mittels der Meldung FACILITY übertragen. Nachdem zwischen Ursprungs-, Transit- und Zielanlage die Meldungen SETUP 70, 71 und CALL_PROC 72, 73 ausgetauscht wurden, wird die ROSE-Operation "dateTimeSet" oder "dateTimeUpdate" mittels der Meldung FACILITY 74 in dem FACILITY-Information-Element von der Transitanlage zu der Ursprungsanlage 1 übertragen. Anschließend wird nach dem Senden der Meldungen ALERT 75 und 76 von der Ziel- zu der Transitanlage bzw. von der Transit- zu der Ursprungsanlage die Meldung FACILITY 77 mit einer der beiden ROSE-Operationen von der Transitanlage 2 zu der Zeitnehmer-Anlage 3 gesendet. Auf diese Weise ist von einer Zeitgeber-Anlage 2 aus sowohl die Zeitnehmer-Ursprungsanlage 1 als auch die Zeitnehmer-Zielanlage 3 mit Zeitinformationen zu steuern. Anschließend wird das Standard-Basic-Call 78 zwischen den Anlagen weitergeführt.

Der Netzknoten, der als Telekommunikationsanlage ausgebildet ist, in welcher die zeitgebende Uhr angeordnet ist, kann als Ursprungsanlage, die im allgemeinen die Anlage des rufenden Teilnehmers ist, als Zielanlage, welche im allgemeinen die Anlage des gerufenen Teilnehmers ist, als Transit-Anlage, als Incoming-Gateway-Anlage und als Outgoing-Gateway-Anlage ausgebildet sein. Die Incoming-Gateway-Anlage stellt eine Anlage an der Übergangsstelle vom DSS1-Netz zu dem auf QSIG-Standard basierenden Netz dar. Die Outgoing-Gateway-Anlage stellt eine Anlage an der Übergangsstelle von dem auf QSIG-Standard basierenden Netz zu dem DSS1-Netz dar. Die Incoming-Gateway-Anlage kann auch anstelle der Ursprungsanlage in dem beschriebenen Verfahrensabläufen gemäß der Ausführungsformen 1-7 angeordnet sein. Ebenso kann die Outgoing-Gateway-Anlage als Zielanlage in den oben beschriebenen Verfahrensabläufen angeordnet sein. Die zeitnehmende Uhr kann in einer Ursprungsanlage, einer Zielanlage, einer Incoming-Gateway-Anlage oder einer Outgoing-Gateway-Anlage angeordnet sein.

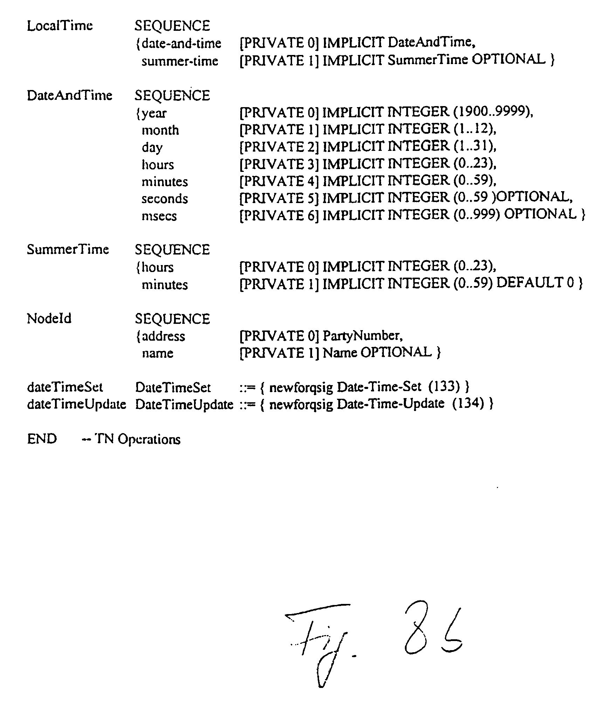

Aus der in den Figuren 8a und 8b gezeigten Tabelle gehen die einzelnen Operationen für das erfindungsgemäße Verfahren detaillierter hervor.

Folgende Detailaspekte der ASN1-Deklaration werden aufgezählt:

Local-Time stellt einen Pflichtparameter des Arguments der beiden neuen ROSE-Operationen dar. Dieser enthält die lokale Zeitangabe der zeitgebenden Uhr.

Node-Id ist ein optionaler Parameter und gestattet der Zeitgeber-Anlage, ihre Identifikation, wie zum Beispiel die Netzknotennummer, innerhalb des Arguments der neuen ROSE-Operationen zu übertragen. Somit ist es möglich, daß Zeitnehmer-Anlagen derart konfiguriert werden, daß sie ihre Systemzeit nur aus Zeitinformationen bestimmter Zeitgeber-Anlagen übernehmen. Somit ist es in Kommunikationsnetzen möglich, mehrere ortsabhängige Bereiche mit unterschiedlichen Zeitzonen anzuordnen. Dies ist insbesondere bei Kommunikationsnetzen wichtig, die sich über mehrere Zeitzonen hinweg erstrecken. Vorteilhaft wird dadurch verhindert, daß eine Zeitnehmer-Anlage die Zeitinformationen einer Zeitgeber-Anlage übernimmt, die einer anderen Zeitzone zugeordnet ist.

Universal-Time ist ein optionaler Parameter in Zeitzonen übergreifenden Kommunikationsnetzen. Wenn die Zeitnehmeranlagen jeweils aus ihren Konfigurationsdaten ihre Abweichungen von der Universal-Time kennen, können diese, wenn die Zeitgeber-Anlage in den Argumenten der neuen ROSE-Operation zusätzlich zu ihrer Local-Time die Universal-Time sendet, aus den Konfigurationsdaten und der Universal-Time ihre eigene Local-Time ableiten. Dies ist insbesondere dann von Bedeutung, wenn Zeitnehmer-Anlagen aus Zeitinformationen beliebiger Zeitgeber-Anlagen ihre Systemzeit ableiten sollen.

Summer-Time ist ein optionaler Bestandteil der Local-Time. Dieser gibt während der Sommerzeit die Voreilung zur regulären Zeit in Stunden und Minuten an. Die Local-Time enthält die offizielle Zeit.

Extension ist ein optionaler Parameter, der einzelne oder mehrere zukünftige Erweiterungen für die Argumente der neuen ROSE-Operation vorsieht.

Die Ausführung der Erfindung ist nicht auf die beschriebenen Beispiele und hervorgehobenen Aspekte beschränkt, sondern ist im Rahmen der Ansprüche ebenso in einer Vielzahl von Abwandlungen möglich, die im Rahmen fachgemäßen Handelns liegen.

### Bezugszeichenliste

- 1: Ursprungsanlage
- 2: Transitanlage
- 3: Zielanlage
- 10, 11, 20, 21, 30, 31, 40, 41, 50, 51, 60, 61, 70, 71: Meldung SETUP
- 12, 13, 22, 23, 42, 43, 52, 53, 62, 63, 72, 73: Meldung CALL_PROC
- 14, 15, 24, 25, 44, 45, 54, 55, 64, 65, 75, 76: Meldung ALERT
- 16, 17, 28, 29, 56, 57: Meldung CONNECT
- 26, 27, 46, 47, 58, 59, 74, 77: Meldung FACILITY
- 18, 32, 48, 66, 78: Fortführung des Standard-Basic-Calls

## Patentansprüche

1. Verfahren zur Realisierung einer Systemzeit in einem Telekommunikationsnetz,
**dadurch gekennzeichnet, daß**
Zeitinformationen von einer einen ersten Netzknofen bildenden ersten Telekommunikationsanlage (1, 2, 3) mittels mindestens einer ROSE-Operation über auf QSIG-Standard basierende Kommunikationsverbindungen an mindestens eine zweite Telekommunikationsanlage (1, 2, 3), die einen zweiten Netzknoten bildet, zu deren Zeitsteuerung und/oder zur Anzeige übertragen werden.

2. Verfahren nach Anspruch 1,
**dadurch gekennzeichnet, daß**
die ROSE-Operation in dem Informationselement Facility mittels der Meldung SETUP (30, 31, 61), ALERT (65, 74, 77), CONNECT (16, 17), DISCONNECT, FACILITY (26, 27, 46, 47, 58, 59), PROGRESS und/oder NOTIFY übertragen wird.

3. Verfahren nach einem der vorangegangenen Ansprüche,
**dadurch gekennzeichnet, daß**
die übertragenden Zeitinformationen die Systemzeit enthalten.

4. Verfahren nach Anspruch 3,
**dadurch gekennzeichnet, daß**
die übertragende Systemzeit zu einem vorbestimmten Zeitpunkt in der zweiten Telekommunikationsanlage eingestellt wird.

5. Verfahren nach einem der vorangegangenen Ansprüche,
**dadurch gekennzeichnet, daß**
die übertragende Zeitinformationen ein Signal zur Neueinstellung der Systemzeit in der zweiten Telekommunikationsanlage enthält.

6. Verfahren nach einem der vorangegangenen Ansprüche,
**dadurch gekennzeichnet, daß**
die zeitinformationssendende oder zeitinformationsempfangende Telekommunikationsanlage (1, 2, 3) einen zwischen einem auf QSIG-Standard basierenden Kommunikationsnetz und einem DSS1-Kommunikationsnetz angeordneten Netzknoten bildet.

7. Verfahren nach einem der vorangegangenen Ansprüche,
**dadurch gekennzeichnet, daß**
mit den Zeitinformationen ein Identifikationscode der zeitinformationssendenden und/oder zeitinformationsempfangenden Telekommunikationsanlage übertragen wird.

8. Verfahren nach Anspruch 7,
**dadurch gekennzeichnet, daß**
die zeitinformationsempfangende Telekommunikationsanlage (1, 2, 3) eine Zeiteinstellung aufgrund einer mit einem vorbestimmten Identifikationscode versehenen Zeitinformation ausführt.

9. Verfahren nach einem der vorangegangenen Ansprüche,
**dadurch gekennzeichnet, daß**
eine Mehrzahl von zeitinformationssendenden Telekommunikationsanlagen vorgesehen ist, deren Zeitinformationen von mindestens einer der zeitinformationsempfangenden Telekommunikationsanlagen ausgewählt werden.

10. Verfahren nach einem der vorangegangenen Ansprüche,
**dadurch gekennzeichnet, daß**
die Zeitinformationen Zeitangaben von Zeitzonen, wie Sommer- und/oder Winterzeiten, beinhalten.

11. Telekommunikationssystem zur Durchführung des Verfahrens nach einem der vorangegangenen Ansprüche,
**gekennzeichnet durch**
Einrichtungen zum Senden von Zeitinformationen mittels mindestens einer ROSE-Operation über die auf QSIG-Standard basierende Kommunikationsverbindung zwischen einer ersten zeitinformationssendenden und zweiten zeitinformationsempfangenden Telekommunikationsanlagen, und
Einrichtungen zum Empfangen der gesendeten Zeitinformationen und zum Einstellen der Systemzeit in den zeitinformationsempfangenden Telekommunikationsanlage.

12. Telekommunikationssystem nach Anspruch 11,
**gekennzeichnet durch**
eine Berechnungseinrichtung zum Ermitteln einer der Telekommunikationsanlage zugeordneten Systemzeit aus den übertragenen Zeitinformationen, die eine Normalzeit enthalten.

13. Telekommunikationssystem nach Anspruch 11 oder 12, **gekennzeichnet durch**
eine Einrichtung zur Auswertung des mit in Zeitinformationen übertragenen Identifikationscodes der zeitinformationssendenen Telekommunikationsanlage (1, 2, 3).

14. Telekommunikationssystem nach einem der Ansprüche 11-13, **gekennzeichnet durch**
Einrichtungen zum Übertragen von Signalen zur Neueinstellung der Systemzeit in der zeitinformationsempfangenden Telekommunikationsanlage.

15. Telekommunikationssystem nach einem der Ansprüche 11-14, **gekennzeichnet durch**
eine Einrichtung zum Auswählen der Zeitinformation einer aus einer Mehrzahl von zeitinformationssendenden Telekommunikationsanlagen in der zeitinformationsempfangenden Telekommunikationsanlage (1, 2, 3).

## Claims

1. Method of setting a system time in a telecommunications network,
**characterized in that**
time information is transmitted from a first telecommunications system (1, 2, 3), constituting a first network node, by means of at least one ROSE operation via communication connections based on the QSIG standard, to at least one second telecommunications system (1, 2, 3), constituting a second network node, for its time control and/or for display.

2. Method in accordance with claim 1,
**characterized in that**
the ROSE operation in the Facility information element is transmitted by means of the SETUP (30, 31, 61), ALERT (65, 74, 77), CONNECT (16, 17), DISCONNECT, FACILITY (26, 27, 46, 47, 58, 59), PROGRESS and/or NOTIFY message.

3. Method according to one of the preceding claims,
**characterized in that**
the time information transmitted contains the system time.

4. Method in accordance with claim 3,
**characterized in that**
the transmitted system time can be set to a specific point in time in the second telecommunications system.

5. Method according to one of the preceding claims,
**characterized in that**
the time information transmitted contains a signal for resetting the system time in the second telecommunications system.

6. Method according to one of the preceding claims,
**characterized in that**
the time information transmitting or time information receiving telecommunications system (1, 2, 3) constitutes a network node arranged between a communication network based on the QSIG standard and a DSS1 communication network.

7. Method according to one of the preceding claims,
**characterized in that**
an identification code for the time information transmitting and/or time information receiving telecommunications system is transmitted along with the time information.

8. Method in accordance with claim 7,
**characterized in that**
the time information receiving telecommunications system (1, 2, 3) performs a time adjustment based on the time information provided with a predefined identification code.

9. Method according to one of the preceding claims,
**characterized in that**
a plurality of time information transmitting telecommunications systems are provided, the time information of which is to be selected by at least one of the time information receiving telecommunications systems.

10. Method according to one of the preceding claims,
**characterized in that**
the time information contains time data on time zones such as summer and/or winter times.

11. Telecommunications system for implementing the method according to one of the preceding claims,
**characterized by**
means for transmitting time information between a first time information transmitting and a second time information receiving telecommunications system by means of at least one ROSE operation via the communication connection based on the QSIG standard, and
means are provided for receiving the transmitted time information and for setting the system time in the time information receiving telecommunications system.

12. Telecommunication system in accordance with claim 11,
**characterized by**
calculation means to determine a system time associated with the telecommunications system from the time information transmitted which includes a standard time.

13. Telecommunications system in accordance with claim 11 or 12,
**characterized by**
means to analyze the identification code transmitted with the time information of the time information transmitting telecommunications system (1, 2, 3).

14. Telecommunications system in accordance with one of claims 11 through 13,
**characterized in that**
means are provided to transmit signals for resetting the system time in the time information receiving telecommunications system.

15. Telecommunications system in accordance with one of claims 11 through 14,
**characterized by**
means in the time information receiving telecommunications system (1, 2, 3) for selecting the time information of one of a plurality of time information transmitting telecommunications systems.

## Revendications

1. Procédé pour réaliser un temps système dans un réseau de télécommunication,
**caractérisé en ce que**
des informations de temps sont transmises au moyen d'au moins une opération ROSE, par des liaisons de communication répondant au standard QSIG, d'une première installation de télécommunication (1, 2, 3) formant un premier noeud de réseau à, au moins, une deuxième installation de télécommunication (1, 2, 3) formant un deuxième noeud de réseau, pour la piloter en temps et/ou pour affichage.

2. Procédé selon la revendication 1,
**caractérisé en ce que**
l'opération ROSE est transmise dans l'installation d'élément d'information au moyen du message SETUP (30, 31, 61), ALERT (65, 74, 77), CONNECT (16, 17), DISCONNECT, FACILITY (26, 27, 46, 47, 58, 59), PROGRESS et/ou NOTIFY.

3. Procédé selon l'une quelconque des revendications précédentes,
**caractérisé en ce que**
les informations de temps transmises contiennent le temps système.

4. Procédé selon la revendication 3,
**caractérisé en ce que**
le temps système transmis est réglé dans la deuxième installation de télécommunication à un moment prédéterminé.

5. Procédé selon l'une quelconque des revendications précédentes,
**caractérisé en ce que**
les informations de temps transmises contiennent un signal de nouveau réglage du temps système dans la deuxième installation de télécommunication.

6. Procédé selon l'une quelconque des revendications précédentes,
**caractérisé en ce que**
l'installation de télécommunication (1, 2, 3) émettant les informations de temps ou recevant les informations de temps forme un noeud de réseau disposé entre un réseau de communication répondant au standard QSIG et un réseau de communication DSS1.

7. Procédé selon l'une quelconque des revendications précédentes,
**caractérisé en ce que**,
un code d'identification de l'installation de télécommunication émettant les informations de temps et/ou recevant les informations de temps est transmis avec les informations de temps.

8. Procédé selon la revendication 7,
**caractérisé en ce que**
l'installation de télécommunication (1, 2, 3) recevant les informations de temps effectue un réglage du temps du fait d'une information de temps pourvue d'un code d'identification prédéterminé.

9. Procédé selon l'une quelconque des revendications précédentes,
**caractérisé en ce que**,
une pluralité d'installations de télécommunication émettant les informations de temps est prévue, dont les informations de temps sont sélectionnées par au moins une des installations de télécommunication recevant les informations.

10. Procédé selon l'une quelconque des revendications précédentes,
**caractérisé en ce que**,
les informations de temps contiennent des indications de temps de zones horaires tels les horaires d'été et/ou d'hiver.

11. Système de télécommunication pour appliquer le procédé selon l'une quelconque des revendications précédentes,
**caractérisé par**
des dispositifs pour émettre des informations de temps au moyen d'au moins une opération ROSE, par la liaison de communication répondant au standard QSIG, entre une première installation de télécommunication émettant les informations de temps et une deuxième recevant les informations de temps, et
des dispositifs pour la réception des informations de temps émises et pour le réglage du temps système de l'installation de télécommunication recevant les informations de temps.

12. Système de télécommunication selon la revendication 11,
**caractérisé par**
un dispositif de calcul pour déterminer un temps système affecté à l'installation de télécommunication à partir des informations de temps transmises qui contiennent un temps standard.

13. Système de télécommunication selon la revendication 11 ou 12,
**caractérisé par**
un dispositif pour exploiter le code d'identification de l'installation de télécommunication (1, 2, 3) émettant les informations de temps transmis avec les informations de temps.

14. Système de télécommunication selon l'une quelconque des revendications 11 à 13,
**caractérisé par**
des dispositifs pour transmettre des signaux de nouveau réglage du temps système dans l'installation de télécommunication recevant les informations de temps.

15. Système de télécommunication selon l'une quelconque des revendications 11 à 14,
**caractérisé par**
un dispositif, dans l'installation de télécommunication recevant les informations de temps (1, 2, 3), pour sélectionner l'information de temps parmi une pluralité d'installations de télécommunication émettant les informations de temps.
